# EUROPÄISCHE PATENTSCHRIFT

(11) **EP 2 841 217 B1**
(45) Veröffentlichungstag und Bekanntmachung des Hinweises auf die Patenterteilung: **29.11.2017**
(21) Anmeldenummer: 13719065.8
(22) Anmeldetag: 22.04.2013
(51) Int. Cl.: B21D 5/04, B21D 53/88

(54) **VERFAHREN ZUM BIEGEN EINES VERBUNDBLECHS**
METHOD FOR BENDING A COMPOSITE SHEET
PROCÉDÉ DE FLÉCHISSEMENT D'UNE TÔLE COMPOSITE

(30) Priorität: 23.04.2012 DE 102012103543; 17.07.2012 DE 102012106420
(43) Veröffentlichungstag der Anmeldung: 04.03.2015
(73) Patentinhaber: ThyssenKrupp Steel Europe AG, 47166 Duisburg (DE); ThyssenKrupp System Engineering GmbH, 74076 Heilbronn (DE)
(72) Erfinder: SCHOTT, Michael, 46119 Oberhausen (DE); MARX, Arndt, 66693 Mettlach-Orscholz (DE); CASPARY, Daniel, 55767 Abentheuer (DE)
(74) Vertreter: Cohausz & Florack
(86) Internationale Anmeldenummer: PCT/EP2013/058271
(87) Internationale Veröffentlichungsnummer: WO 2013/160234

(56) Entgegenhaltungen:
- DE-A1-102010 016 914
- DE-A1-102010 048 589
- DE-C1- 4 435 719
- FR-A1- 2 760 983
- FR-A1- 2 803 230
- JP-A- H05 131 220
- US-A1- 2008 155 804

## Beschreibung

Die Erfindung betrifft ein Verfahren zum Biegen mindestens einer Kante eines Verbundblechs, welches mindestens zwei äußere Metallschichten und eine innere Kunststoffschicht aufweist, bei welchem die Kante des Verbundblechs in einem ersten Schritt abgekantet wird und in mindestens einem weiteren Verfahrensschritt fertig gebogen wird.

Das Biegen von Blechen in mehreren Teilschritten ist bereits bekannt. Beispielsweise werden die Kanten von Verbundblechen beim Falzen in Teilschritten um ca. 180 ° umgebogen. Bei den üblichen Verfahren wird die Kante des Bleches zunächst auf etwa 90 ° abgekantet und anschließend auf 120 ° bis 130 ° vorgefalzt. Anschließend wird der Falz durch Umbiegen des vorgefalzten Bereichs auf ca. 180 ° erzeugt. Über den Falz können beispielsweise Bleche untereinander verbunden werden. Auf der anderen Seite können durch Falzen auch weniger scharfkantige Bauteilkanten erzeugt werden.
Aus der deutschen Offenlegungsschrift DE 10 2010 016 914 A1 ist darüber hinaus ein Verfahren zum Biegen von Verbundblechen bekannt, bei welchem ein schwenkbares Biegewerkzeug verwendet wird und der Biegestempel in der Biegekante eine eingelassene Nut aufweist. Es hat sich herausgestellt, dass bei dem üblichen Herstellverfahren, bei welchem zunächst die Biegekante auf 90 ° abgekantet, vorgefalzt und anschließend fertig gefalzt wird Verbundbleche dazu neigen, Risse aufzuweisen, so dass der Falz fehlerhaft ist. Das aus der genannten deutschen Offenlegungsschrift bekannte Verfahren zur Herstellung eines Falz eines Verbundblechs führt zu einer Delamination im Bereich der Biegekante. Bei der Herstellung des Falzes kommt es im Bereich der Biegekante dann unter Umständen ebenfalls zu einem Riss in der äußeren Metallschicht oder aber zu einem unkontrollierten Biegeverhalten der Metallschicht.

In der JP H05-131220 A wird ein Verfahren zum Biegen eines Verbundblechs offenbart, bei welchem eine definierte Niederhalterkraft eingestellt wird. Für ein zweistufiges Biegen, mit welchem die Kante des Blechs in eine U-Form gebracht wird, ist am Niederhalter eine Ausnehmung vorgesehen, in welche die Kante eingebogen wird.

Die US 2008/0155804 A1 betrifft ein Formwalzen eines Verbundbleches mit einem gewellten Kernblech und zwei Deckblech zu einer Stoßstange.

Die FR 2 803 230 A1 und DE 10 2010 048 589 A1 offenbaren weitere Verfahren zum Biegen von Blechen.

In der FR 2 760 983 A1 wird ein Verfahren zum Biegen von Verbundblechen offenbart, wobei Einschnürungen in die Deckbleche eingebracht werden.

Hiervon ausgehend liegt der vorliegenden Erfindung die Aufgabe zugrunde, ein Verfahren zum Biegen eines Verbundblechs zur Verfügung zu stellen, bei welchem Risse in den Metallschichten des Verbundblechs vermieden werden können und gleichzeitig auf einfache Weise ein Falz bereitgestellt werden kann.

Die oben hergeleitete Aufgabe wird gemäß einer ersten Lehre durch ein Verfahren dadurch gelöst, dass beim Abkanten der Kante ein Abkantstempel, ein Niederhalter und ein Abkantbacken verwendet wird, der Abkantstempel eine in Biegerichtung unterhalb der Biegekante des Abkantstempels verlaufende Nut aufweist, wobei es beim Abkanten zu einer Materialverdrängung in die unterhalb der Biegekante vorhandene Nut und zu einer Ausbeulung des Verbundblechs kommt und das Verbundblech gefalzt wird, wobei die Ausbeulung des Verbundblechs auf der inneren Seite der Biegekante bis zur Erzeugung der endgültigen Falz erhalten bleibt.

Es hat sich gezeigt, dass bei der Verwendung eines Abkantstempels, insbesondere mit einem kleinen Abkantradius, welcher unterhalb der Biegekante eine Nut aufweist, vorzugsweise in Kombination mit einem kleinen Einlaufradius am Abkantbacken, Risse beim Biegen des Verbundblechs dadurch vermieden werden können, dass es beim Abkanten zu einer Materialverdrängung in die unterhalb der Biegekante vorhandene Nut kommt, so dass der Druck auf die äußeren Metallschichten des Verbundblechs beim Abkanten verringert wird. Die äußeren Metallschichten werden dadurch nicht so stark belastet, so dass Risse in den äußeren Metallschichten verhindert werden können.

Gemäß einer ersten Ausgestaltung entspricht der Einlauf- oder Abkantspalt zwischen dem Abkantstempel und der Abkantbacke mindestens der Gesamtdicke des Verbundblechs oder ist größer als die Gesamtdicke des Verbundblechs. Hierdurch kann die Prozesssicherheit während des Biegens des Verbundblechs gesteigert werden, da die Gefahr von Verklemmungen deutlich reduziert ist.

Vorzugsweise wird gemäß einer weiteren Ausgestaltung des Verfahrens das Verbundblech rechtwinklig abgekantet und anschließend weitergebogen. Einerseits können bei dem rechtwinkligen Abkanten einfache Abkantwerkzeuge, insbesondere ein einfacher Abkantbacken mit einer zur Blechebene senkrechten Führung verwendet werden. Andererseits erlaubt das rechtwinklige Abkanten auch, dass ausreichend Material in die vom Abkantstempel bereitgestellte Nut eingebracht wird.

Weniger scharfkantige Verbundbleche aber auch deren Verbindung mit weiteren Bauteilen können dadurch erreicht werden, dass das abgekantete Verbundblech in einem weiteren Verfahrensschritt vorgefalzt und anschließend fertig gefalzt wird. Aufgrund des erfindungsgemäßen Verfahrens können Risse in den äußeren Metallschichten des Falzes des Verbundblechs mit hoher Prozesssicherheit vermieden werden.

Wird gemäß einer weiteren Ausführungsform das Verbundblech vor dem Abkanten, beispielsweise in einem vorgelagerten Arbeitsschritt, an den Ecken zugeschnitten und wird das zugeschnittene Verbundblech umlaufend abgekantet, vorgefalzt und fertig gefalzt, kann beispielsweise auf einfache Weise ein einen umlaufenden Falz aufweisendes Verbundblech bereitgestellt werden. Ein entsprechendes Verbundblech kann beispielsweise für ein Kraftfahrzeugteil, beispielsweise ein Fahrzeugdach, Fahrzeugboden, Fahrzeugtür oder eine Motorhaube etc. eingesetzt werden.

Um die notwendigen Festigkeiten des Verbundblechteils bereitzustellen, können die äußeren Metallschichten aus Stahl, einer Aluminium- und/oder einer Magnesiumlegierung bestehen. Denkbar ist auch die Verwendung von verschiedenen Metallschichten, beispielsweise die Kombination einer Metallschicht aus einer Aluminiumlegierung und einem Stahl. Die Dicken der äußeren Metallschichten betragen vorzugsweise 0,1 mm bis 0,8 mm, vorzugsweise maximal 0,5 mm, insbesondere maximal 0,4 mm. Je geringer die Metallschichen desto geringer ist auch das Gewicht des Verbundblechs. Ein verringertes Gewicht ist insbesondere bei der Verwendung des Verbundblechs im Kraftfahrzeugbereich vorteilhaft.

Die Kunststoffschichtdicken betragen beispielsweise etwa 0,1 mm bis 2,0 mm, vorzugsweise 0,2 mm bis 1,2 mm, insbesondere 0,3 bis 0,8 mm. Auch hier trägt die Verringerung der Kunststoffschicht zur Reduzierung des Gesamtgewichts bei, auch wenn dies in einem geringeren Maße geschieht als das bei der Verringerung der Metallschichtdicken. Die Kunststoffschichtdicke muss allerdings darüber hinaus zusätzliche Eigenschaften bereitstellen, beispielsweise Vibrationsdämpfung und Isolierung. Beide Eigenschaften können bei Kunststoffschichtdicken von 0,3 mm bis 0,8 mm sehr gut in Einklang gebracht werden.

Bevorzugt wird für die Kunststoffschicht ein thermoplastischer Kunststoff, beispielsweise ein Polyehtylen, Polyamid oder eine Mischung daraus, beispielsweise ein PE-PA-Compound verwendet. Die aus einem thermoplastischen Kunststoff bestehende Kunststoffschicht des Verbundblechteils kann dann auf kostengünstige Weise hergestellt werden. Die thermoplastischen Eigenschaften des Kunststoffes können darüber hinaus vorteilhaft bei der Umformung des Verbundblechs eingesetzt werden, beispielsweise in dem das Verbundblech in warmen Zustand umgeformt wird, so dass der thermoplastische Kunststoff leichter umgeformt werden kann.

Wie bereits zuvor ausgeführt wird ein gefalztes Verbundblech mit einem erfindungsgemäßen Verfahren bereitgestellt. Das mit dem erfindungsgemäßen Verfahren hergestellte Verbundblech zeigt insbesondere an dem Falz keine Risse in den äußeren Metallschichten.

Besonders vorteilhaft sind Ausführungsformen des Verbundblechs dann, wenn sie ein Teil eines Kraftfahrzeugs, ein Teil einer Motorhaube, eines Kofferraumdeckels, einer Fahrzeugtür, eines Fahrzeugdachs oder eines Fahrzeugbodens sind. Im Kraftfahrzeugbereich sind Verbundbleche aufgrund des leichten Gewichts, der Vibrationsarmut, thermischen Isolierung und der hohen Festigkeiten bei geringem Eigengewicht besonders vorteilhaft.

Im Weiteren soll die Erfindung anhand von Ausführungsbeispielen in Verbindung mit der Zeichnung näher erläutert werden. Die Zeichnung zeigt in
- Fig. 1 bis 3: in einer schematischen Schnittansicht ein Ausführungsbeispiel des Verfahrens zu drei verschiedenen Zeitpunkten,
- Fig. 4 bis 7: ein Ausführungsbeispiel die weiteren Verfahrensschritte zur Herstellung einer Falz,
- Fig. 8: in einer perspektivischen, schematischen Darstellung ein zugeschnittenes Verbundblech und
- Fig. 9: in einer perspektivischen Darstellung das zugeschnittene Verbundblech aus Fig. 8 nach der Erzeugung eines umlaufenden Falz.

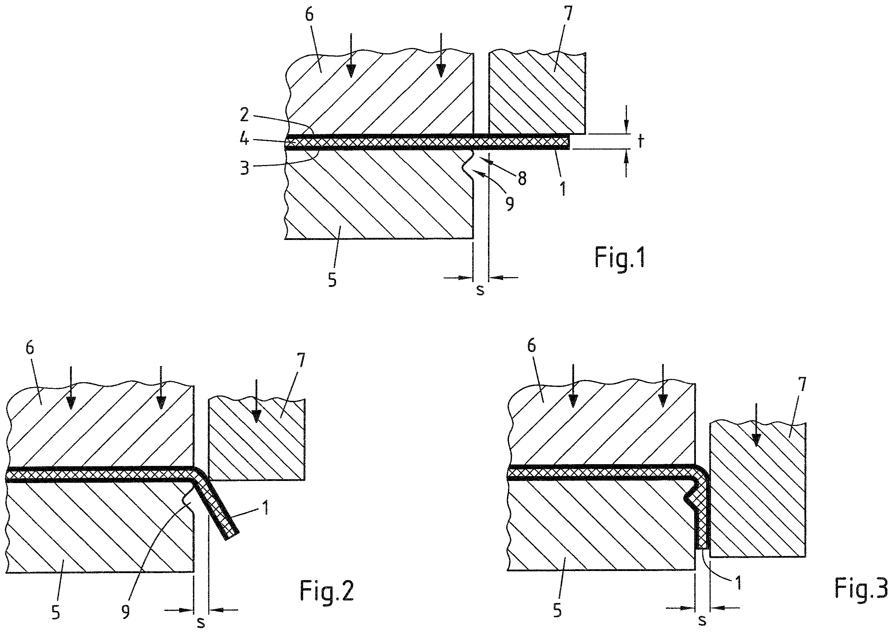

Fig. 1 zeigt zunächst in einer schematischen Schnittdarstellung ein Verbundblech 1, welches aus zwei äußeren Metallschichten 2, 3 sowie einer zwischen beiden äußeren Metallschichten 2, 3 angeordneten Kunststoffschicht 4 besteht. Die äußeren Metallschichten 2, 3 können wie bereits ausgeführt, beispielsweise aus Stahl, einer Aluminium- und/oder einer Magnesiumlegierung aber auch einer Kombination verschiedener Metalle bestehen. Die Dicken der Metallschichten betragen vorzugsweise 0,1 bis 0,8 mm, besonders bevorzugt 0,2 bis 0,4 mm. Die Kunststoffschicht 4, welche zwischen den beiden äußeren Metallschichten 2, 3 angeordnet ist, kann beispielsweise eine Dicke von 0,1 bis 2,0 mm, besonders bevorzugt 0,3 bis 0,8 mm aufweisen und besteht vorzugsweise aus einem thermoplastischen Kunststoff, beispielsweise Polyamid und/oder Polyethylen.

Darüber hinaus ist in Fig. 1 ein Abkantstempel 5, ein Niederhalter 6 sowie ein Abkantbacken 7 zu erkennen. Der Abkantstempel 5 weist eine Biegekante 8 auf, unterhalb welcher eine Nut 9 angeordnet ist. Die Biegekante hat einen Abkantradius, der beispielsweise kleiner als 4 mm, vorzugsweise kleiner als 3 mm, besonders bevorzugt kleiner als 2 mm ist. Der Abkantbacken 7, der einen Einlaufradius hat, der ebenfalls beispielsweise kleiner als 4 mm, vorzugsweise kleiner als 3 mm ist, ist mit einem Abstand s vom Niederhalter angeordnet, so dass ein Einlaufspalt bzw. Abkantspalt mit einer Breite s entsteht. Durch das Zusammenwirken der Abkantbacke mit kleinem Einlaufradius und Abkantstempel mit kleinem Abkantradius kommt es in der Kunststoffschicht zunächst zu einer Materialanhäufung im Biegebereich. Die Breite des Abkantspaltes s entspricht mindestens der gesamten Dicke t des Verbundblechs, so dass es beim Biegen des Verbundblechs zu einer Materialverdrängung im Verbundblech kommt. Hierdurch wird die innere Metallschicht 3 in die unterhalb der Biegekante 8 angeordnete Nut 9 gedrückt. Dies erfolgt vorzugsweise entlang der gesamten Biegekante. Die äußere Metallschicht 3 wird dabei so verformt, dass das Verbundblech 1 in die Nut 9 des Abkantstempels 5 zumindest teilweise eingeformt wird. Durch das Ausbeulen des Verbundblechs im Bereich der Nut 9 wird ermöglicht, dass das Kunststoffmaterial, welches einen sehr starken Druck auf die äußere Metallschicht 2 des Verbundbleches 1 ausüben kann, in den Nutbereich verdrängt werden kann und damit der Druck auf die äußere Metallschicht abnimmt. Dadurch lassen sich enge Abkantradien von besonders bevorzugt 2 mm und weniger im Verbundblech durch Abkanten prozesssicher einstellen. In diesem Ausführungsbeispiel ist eine Abkantbacke 7 mit einem Einlaufradius von 2 mm dargestellt, wobei der Abkantradius ca. 1 mm beträgt. Hierdurch werden die typischerweise beim Herstellen eines Falzes auftretende Risse in den äußeren Metallschichten vermieden.

Die Fig. 2 und 3 zeigen in der schematischen Schnittansicht, wie das Verbundblech 1 beim Abkanten durch den Abkantbacken 7 in den Nutbereich des Abkantstempels 5 eingeformt wird.

Durch das Zusammenwirken kleiner Abkant- sowie Einlaufradien mit der eingebrachten Nut unterhalb der Biegekante des Abkantstempels und einem Einlauf- oder Abkantspalt s kann zusätzlich eine Reduzierung der Rückfederung erreicht werden. Das reduzierte Rückfederungsverhalten ist insbesondere für weitere Prozessschritte, beispielsweise für das Falzen, von Vorteil.

Darüber hinaus hat sich herausgestellt, dass bei Verwendung eines Abkantspaltes, welcher mindestens der Gesamtdicke t des Verbundblechs entspricht die Gefahr eines Einklemmens während des Biegens deutlich verringert werden kann und damit die Prozesssicherheit des Verfahrens verbessert wird.

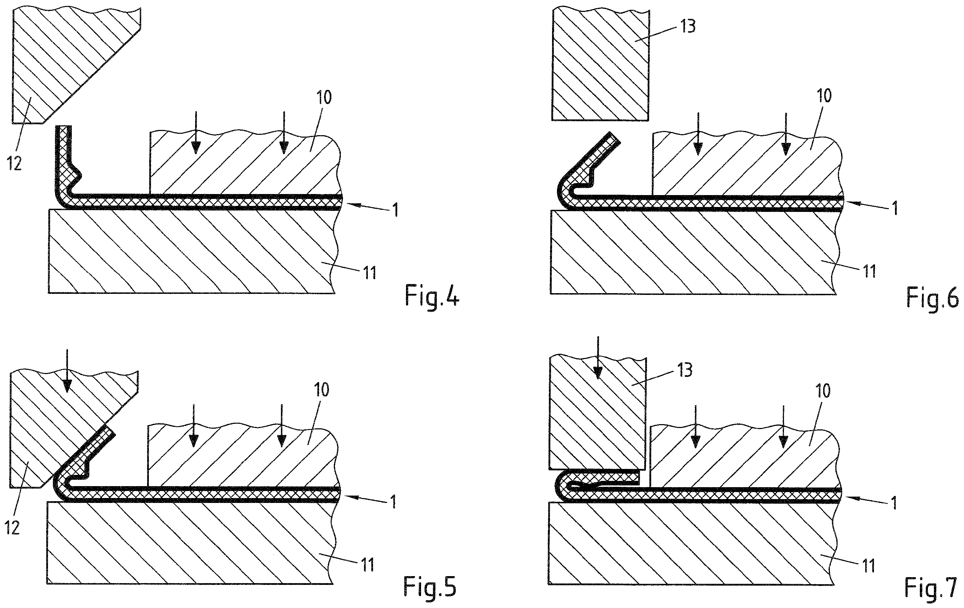

Soll nun gemäß einem weiteren Ausführungsbeispiel nach dem Abkanten des Verbundblechs 1 ein Falz hergestellt werden, kann dies beispielsweise derart geschehen, wie dies in Fig. 4 bis Fig. 7 dargestellt ist. Das abgekantete Verbundblech 1 wird hierzu beispielsweise in einer nächsten Vorrichtung auf einer Ablage 11 angeordnet und mit einem Niederhalter 10 fixiert. Anschließend wird über einen Vorfalzstempel 12 der in einem 90 ° Winkel vom restlichen Verbundblech abstehende Teil der Kante weiter umgebogen, beispielsweise auf einen Winkel von etwa 135 °, wie dies beispielsweise in Fig. 5 dargestellt ist. Hierzu wird ein einfacher, abgeschrägter Stempel verwendet, welcher beim Herunterfahren die zu 90 ° abgekantete Kante weiter umbiegt. In Fig. 6. ist nun dargestellt, dass ein weiterer Stempel 13, welcher nunmehr zur Erzeugung der Falz vorgesehen ist, verwendet wird, um die vorgefalzte Kante des Verbundblechs 1 fertig zu falzen. Dies ist in Fig. 7. dargestellt. In den Fig. 4 bis 7 ist deutlich zu erkennen, dass die Ausbeulung des Verbundblechs auf der inneren Seite der Biegekante bis zur Erzeugung der endgültigen Falz erhalten bleibt. Das in der Ausbeulung vorhandene Material ermöglich, dass aus dem inneren des Verbundblechs aufgrund der Biegung der Druck auf die äußeren Metallschichten 2 des Verbundblechs verringert werden kann und auch beim Falzen des Verbundblechs Risse vermieden werden können.

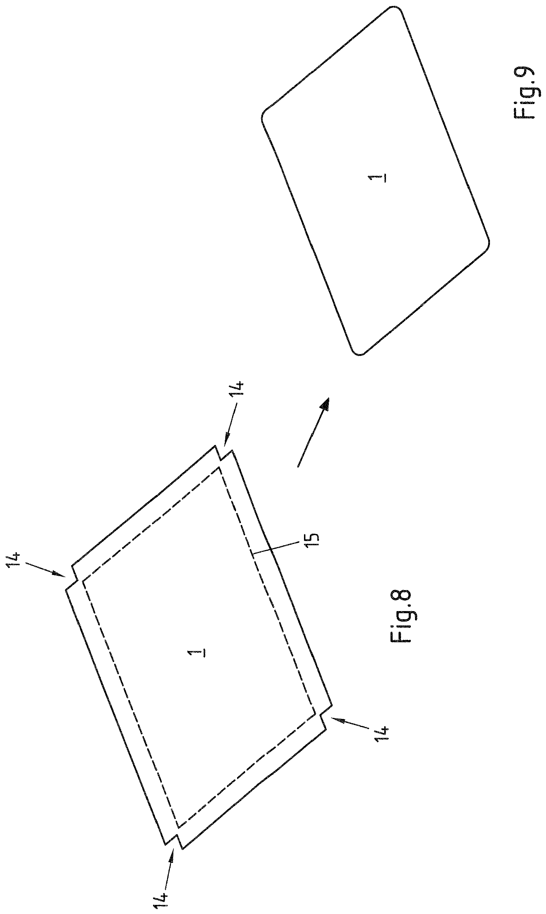

In Fig. 8 ist nun ein Verbundblech dargestellt, welches an seinen Ecken 14 derart zugeschnitten ist, dass in einen Verfahrensschritt das Verbundblech 1 entlang der Biegekante 15 umlaufend abgekantet, beispielsweise vorgefalzt und fertig gefalzt werden kann.

Das Ergebnis des Falzprozesses ist in Fig. 9 dargestellt. Das Verbundblech 1 weist, wie in Fig. 9 zu erkennen ist, deutlich gerundete Kanten auf und kann beispielsweise als Kraftfahrzeugdach, -boden, -tür, -kofferraumdeckel oder Motorhaube oder Teile derselben eingesetzt werden.

## Patentansprüche

1. Verfahren zum Biegen mindestens einer Kante eines Verbundblechs (1), welches mindestens zwei äußere Metallschichten (2, 3) und eine innere Kunststoffschicht (4) aufweist, bei welchem die Kante des Verbundblechs (1) in einem ersten Schritt abgekantet wird und in mindestens einem weiteren Verfahrensschritt fertig gebogen wird, wobei beim Abkanten der Kante ein Abkantstempel (5), ein Niederhalter (6) und ein Abkantbacken (7) verwendet wird, der Abkantstempel (5) eine in Biegerichtung unterhalb der Biegekante (8) des Abkantstempels (5) verlaufende Nut (9) aufweist, **dadurch gekennzeichnet, dass** es beim Abkanten zu einer Materialverdrängung in die unterhalb der Biegekante (8) vorhandene Nut (9) und zu einer Ausbeulung des Verbundblechs kommt und
das Verbundblech gefalzt wird, wobei die Ausbeulung des Verbundblechs auf der inneren Seite der Biegekante bis zur Erzeugung der endgültigen Falz erhalten bleibt.

2. Verfahren nach Anspruch 1,
**dadurch gekennzeichnet, dass** der Einlauf- oder Abkantspalt (s) zwischen dem Abkantstempel (5) und der Abkantbacke (7) mindestens der Gesamtdicke des Verbundblechs (1) entspricht oder größer als die Gesamtdicke des Verbundbleches (1) ist.

3. Verfahren nach Anspruch 1 oder 2,
**dadurch gekennzeichnet, dass** das Verbundblech (1) rechtwinklig abgekantet wird und anschließend weitergebogen wird.

4. Verfahren nach einem der Ansprüche 1 bis 3,
**dadurch gekennzeichnet, dass** das abgekantete Verbundblech (1) in einem weiteren Verfahrensschritt vorgefalzt und anschließend fertig gefalzt wird.

5. Verfahren nach einem der Ansprüche 1 bis 4,
**dadurch gekennzeichnet, dass** das Verbundblech vor dem Abkanten an den Ecken zugeschnitten wird und das zugeschnittene Verbundblech umlaufend abgekantet, vorgefalzt und fertig gefalzt wird.

6. Verfahren nach einem der Ansprüche 1 bis 5,
**dadurch gekennzeichnet, dass** die äußeren Metallschichten (2, 3) aus Stahl, einer Aluminium- und/oder einer Magnesiumlegierung bestehen.

7. Verfahren nach einem der Ansprüche 1 bis 6,
**dadurch gekennzeichnet, dass** die Dicken der äußeren Metallschichten (2, 3) 0,1 mm bis 0,8 mm betragen.

8. Verfahren nach einem der Ansprüche 1 bis 7,
**dadurch gekennzeichnet, dass** die Kunststoffschicht (4) eine Dicke von 0,1 mm bis 2,0 mm aufweist.

9. Verfahren nach einem der Ansprüche 1 bis 8,
**dadurch gekennzeichnet, dass** die Kunststoffschicht (4) aus einem thermoplastischem Kunststoff besteht.

10. Verfahren nach einem der Ansprüche 1 bis 9,
**dadurch gekennzeichnet, dass** das Verbundblech (1) zu einem Teil eines Kraftfahrzeugs, ein Teil einer Motorhaube, eines Kofferraumdeckels, einer Fahrzeugtür, eines Fahrzeugdachs oder eines Fahrzeugbodens gebogen wird.

## Claims

1. Method for bending at least one edge of a composite sheet (1), which has at least two outer metallic layers (2, 3) and an inner plastic layer (4), in which the edge of the composite sheet (1) is edge-bent in a first step and is bent into the finished form in at least one further process step, wherein, during edge-bending, an edge-bending punch (5), a holding-down device (6) and an edge-bending jaw (7) are used, the edge-bending punch (5) has a groove (9) running in the bending direction below the bending edge (8) of the edge-bending punch (5), **characterised in that**, during edge-bending, there is a material displacement into the groove (9) below the bending edge (8) and a bulge of the composite sheet and the composite sheet is folded, wherein the bulge of the composite sheet is maintained on the inner side of the bending edge until the production of the final fold.

2. Method according to claim 1, **characterised in that** the inlet or edge-bending gap (s) between the edge-bending punch (5) and the edge-bending jaw (7) corresponds to at least the overall thickness of the composite sheet (1) or is greater than the overall thickness of the composite sheet (1).

3. Method according to claim 1 or 2, **characterised in that** the composite sheet (1) is edge-bent at right angles and subsequently bent further.

4. Method according to any one of claims 1 to 3, **characterised in that** the edge-bent composite sheet (1) is pre-folded in a further process step and subsequently folded into the finished form.

5. Method according to any one of claims 1 to 4, **characterised in that** the composite sheet is cut to size at the corners before the edge-bending and the cut-to-size composite blank is circumferentially edge-bent, pre-folded and folded into the finished form.

6. Method according to any one of claims 1 to 5, **characterised in that** the outer metallic layers (2, 3) consist of steel, of an aluminium alloy and/or of a magnesium alloy.

7. Method according to any one of claims 1 to 6, **characterised in that** the thicknesses of the outer metallic layers (2, 3) are 0.1 mm to 0.8 mm.

8. Method according to any one of claims 1 to 7, **characterised in that** the plastic layer (4) has a thickness of 0.1 mm to 2.0 mm.

9. Method according to any one of claims 1 to 8, **characterised in that** the plastic layer (4) consists of a thermoplastic material.

10. Method according to any one of the claims 1 to 9, **characterised in that** the composite sheet (1) is bent to a part of a motor vehicle, a part of an engine bonnet, of a boot lid, of a vehicle door, of a vehicle roof or of a vehicle floor.

## Revendications

1. Procédé pour cintrer au moins une arête d'une tôle composite (1), laquelle présente au moins deux couches métalliques (2, 3) extérieures et une couche de matière plastique (4) intérieure, dans lequel l'arête de la tôle composite (1) est courbée dans une première étape et est finie d'être cintrée au cours d'au moins une autre étape du procédé, dans lequel, lors de la courbure de l'arête, un poinçon de courbure (5), un serre-flanc (6) et un mors de courbure (7) sont utilisés, le poinçon de courbure (5) présente une rainure (9) s'étendant en direction de cintrage en dessous de l'arête de cintrage (8) du poinçon de courbure (5),
**caractérisé en ce que**, lors de la courbure, il y a un déplacement de matière dans la rainure (9) présente au-dessous de l'arête de cintrage (8) et un renflement de la tôle composite et que la tôle composite est pliée, dans lequel le renflement de la tôle composite est conservé sur le côté intérieur de l'arête de cintrage jusqu'à la génération du pli définitif.

2. Procédé selon la revendication 1, **caractérisé en ce que** la fente d'entrée ou de courbure (s) entre le poinçon de courbure (5) et le mors de courbure (7) correspond au moins à l'épaisseur globale de la tôle composite (1) ou est plus grande que l'épaisseur globale de la tôle composite (1).

3. Procédé selon la revendication 1 ou 2, **caractérisé en ce que** la tôle composite (1) est courbée en angle droit et est ensuite davantage cintrée.

4. Procédé selon l'une des revendications 1 à 3,
**caractérisé en ce que** la tôle composite courbée (1) est pré-pliée au cours d'une autre étape du procédé et ensuite finie d'être pliée.

5. Procédé selon l'une des revendications 1 à 4,
**caractérisé en ce que** la tôle composite est coupée aux angles avant la courbure et que la tôle composite coupée est courbée, pré-pliée et finie d'être pliée de manière périphérique.

6. Procédé selon l'une des revendications 1 à 5,
**caractérisé en ce que** les couches métalliques extérieures (2, 3) se composent d'acier, d'un alliage d'aluminium et/ou de magnésium.

7. Procédé selon l'une des revendications 1 à 6,
**caractérisé en ce que** les épaisseurs des couches métalliques extérieures (2, 3) sont de 0,1 mm à 0,8 mm.

8. Procédé selon l'une des revendications 1 à 7,
**caractérisé en ce que** la couche de matière plastique (4) présente une épaisseur de 0,1 mm à 2,0 mm.

9. Procédé selon l'une des revendications 1 à 8,
**caractérisé en ce que** la couche de matière plastique (4) se compose d'une matière plastique thermoplastique.

10. Procédé selon l'une des revendications 1 à 9,
**caractérisé en ce que** la tôle composite (1) est cintrée pour donner une pièce d'un véhicule automobile, une pièce d'un capot de moteur, d'un couvercle de coffre, d'une portière de véhicule, d'un toit de véhicule ou d'un plancher de véhicule.
